# NEUE EUROPÄISCHE PATENTSCHRIFT

(11) **EP 2 376 819 B2**
(45) Veröffentlichungstag und Bekanntmachung des Hinweises auf die Entscheidung über den Einspruch: **11.10.2017**
(45) Hinweis auf die Patenterteilung: 26.03.2014
(21) Anmeldenummer: 10700059.8
(22) Anmeldetag: 11.01.2010
(51) Int. Cl.: F16J 15/00, F16J 15/24, F16J 15/40, F16J 15/44, F16J 15/56, F04B 53/16, F04B 39/00, F04B 53/14

(54) **DICHTANORDNUNG ZUR ABDICHTUNG EINER KOLBENSTANGE EINES KOLBENKOMPRESSORS**
SEALING ARRANGEMENT FOR SEALING A PISTON ROD OF A RECIPROCATING COMPRESSOR
DISPOSITIF D'ÉTANCHÉITÉ PERMETTANT DE RENDRE ÉTANCHE UNE TIGE DE PISTON D'UN COMPRESSEUR À PISTON

(30) Priorität: 12.01.2009 AT 392009
(43) Veröffentlichungstag der Anmeldung: 19.10.2011
(73) Patentinhaber: Hoerbiger Kompressortechnik Holding GmbH, 1220 Wien (AT)
(72) Erfinder: LINDNER-SILWESTER, Tino, A-1230 Wien (AT); HOLD, Christian, A-2102 Bisamberg (AT); BRANDL, Andreas, A-1050 Wien (AT); KERNBICHLER, Christian, A-2431 Enzersdorf an der Fischa (AT)
(74) Vertreter: Patentanwälte Pinter & Weiss OG
(86) Internationale Anmeldenummer: PCT/EP2010/050216
(87) Internationale Veröffentlichungsnummer: WO 2010/079227

(56) Entgegenhaltungen:
- EP-A2- 0 209 999
- DE-A1- 4 211 192
- JP-A- 10 169 788
- JP-U- 60 114 373
- JP-U- 60 172 058
- JP-U- 63 075 668
- US-A- 3 194 568
- US-A- 4 469 017

## Beschreibung

Die gegenständliche Erfindung betrifft eine Dichtanordnung zur Abdichtung einer hin- und hergehenden Kolbenstange eines Kolbenkompressors mit einem ersten und zweiten Dichtelement, die in einer Ausnehmung der Dichtanordnung axial beabstandet angeordnet sind, wobei die Dichtelemente jeweils an einem axialen Ende der Ausnehmung und an der Kolbenstange anliegend angeordnet sind und in der Dichtanordnung eine Zuleitung für ein Dichtmedium vorgesehen ist, die mit der Ausnehmung verbunden ist.

Herkömmliche Abdichtungen zwischen einer hin- und herbewegten Kolbenstange, z.B. eines Kolbenkompressors, und eines feststehenden Maschinenteils zur Abdichtung eines Raumes mit hohen Druck, z.B. der Arbeitsdruck im Zylinder des Kompressors, gegenüber einen Raum mit niedrigem Druck, z.B. der Atmosphärendruck im Kurbelgehäuse des Kompressors, werden in der Regel als Dichtpackungen ausgeführt. Eine solche Dichtpackung umfasst mehrere axial hintereinander angeordnete Packungsringe bzw. Packungsring-Kombinationen. Am häufigsten werden Kombinationen aus einem radial geschnittenen und einem tangential geschnittenen Packungsring verwendet, wie z.B. aus der EP 1 146 264 A2 hervorgehend. Daneben werden auch segmentierte Ringdesigns, bei denen ein Packungsring aus mehreren Ringsegmenten zusammengesetzt wird, eingesetzt, wie z.B. aus der US 4 350 349 A bekannt. Solche Abdichtungen sind jedoch keine zu 100% dichten Systeme, sondern weisen immer eine gewisse Leckagemenge auf, die durch die Abdichtung entweicht.

In gewissen Anwendungen von Kompressoren, wie z.B. in Kompressorstationen bei der Beförderung von Erdgas, wird es aus Umweltschutzgründen immer wichtiger (auch durch immer strenger werdende Vorgabe des Gesetzgebers), die Leckage des Arbeitsmediums (z.B. Erdgas) zu minimieren. Es müssten daher durch herkömmliche Dichtpackungen hohe Anforderungen erfüllt werden, was allerdings nicht immer möglich ist, aber zumindest den Aufwand für die Abdichtung erheblich erhöhen würde.

Es sind aus dem Stand der Technik auch Abdichtungen zwischen zwei relativ zueinander bewegten Bauteilen, wie z.B. zwischen einer Kolbenstange und einem Maschinengehäuse, bekannt, die nach dem Prinzip einer "Flüssigkeitssperre" arbeiten. Dabei wird zwischen zwei Dichtelementen ein Dichtmedium (z.B. Öl oder eine andere geeignete Flüssigkeit) unter einem höheren Druck als der Umgebungsdruck, z.B. der Arbeitsdruck im Zylinder eines Kompressors, zugeführt. Damit kann ein Arbeitsmedium, wie z.B. ein Gas oder Luft, das ein niedrigeres Druckniveau aufweist als der Druck des Dichtmediums, durch die Abdichtung nicht nach außen dringen. Ein Beispiel einer solchen Abdichtung ist z.B. in der DE 28 39 243 A1 mit Öl als Dichtmedium oder in der DE 10 2005 034 908 A1 mit einer ionischen Flüssigkeit als Dichtmedium gezeigt. Auch EP 0 209 999 zeigt eine solche Abdichtung. Solche Abdichtungen werden daher auch als gasdichte Abdichtungen bezeichnet und können auch im Stillstand dicht gehalten werden, solange der Dichtmediumdruck aufrecht erhalten wird. Allerdings kommt es dabei in der Regel zu einer Leckage von Dichtmedium, die entsprechend aufgefangen werden muss.

Insbesondere bei Kolbenkompressoren können neben den Hubbewegungen in axialer Richtung der Kolbenstange aber noch signifikante Bewegungen quer dazu auftreten. Eine Abdichtung einer Kolbenstange eines Kolbenkompressors muss daher in der Lage sein, auch bei solchen Querbewegungen zu funktionieren und sicher abzudichten.

Es ist daher eine Aufgabe der gegenständlichen Erfindung eine nach dem Prinzip einer Dichtmediumbarriere funktionierende gasdichte Abdichtung einer Kolbenstange anzugeben, die in der Lage ist, mögliche Querbewegungen der Kolbenstange bei Aufrechterhaltung der Dichtwirkung auszugleichen und die eine hohe Betriebssicherheit aufweist.

Diese Aufgabe wird erfindungsgemäß dadurch gelöst, dass die Dichtelemente in radialer Richtung beabstandet vom radialen Ende der Ausnehmung angeordnet sind, sodass das Dichtmedium axial und an der radial äußeren Umfangsfläche des ersten und zweiten Dichtelements angreift. Durch die radiale Beabstandung zum radialen Ende der Ausnehmung wird sichergestellt, dass die Dichtelemente bei einer allfälligen Querbewegung der Kolbenstange sich mit dieser ungehindert (abgesehen von allfälligen Reibungskräften) mitbewegen können, ohne dass die Dichtwirkung dabei verloren gehen würde. An einem ersten axialen Ende der Dichtanordnung ist in einer dritten Ausnehmung der Dichtanordnung ein drittes Dichtelement angeordnet, das als Packungsring oder Packungsring-Kombination ausgeführt ist. Dieses dritte Dichtelement verhindert einerseits das Eindringen von Schmutz in die Abdichtung, und hält andererseits im Falle des Versagens des benachbarten Dichtelements noch eine gewisse Dichtwirkung aufrecht, womit zumindest ein unerwünschtes ungehindertes Austreten von Dichtmedium verhindert werden kann. Dies erhöht die Betriebssicherheit der Dichtanordnung. Am ersten axialen Ende der Dichtanordnung ist zwischen erstem Dichtelement und drittem Dichtelement in einer weiteren als siebenten bezeichneten Ausnehmung der Dichtanordnung ein Abstreifring angeordnet, um eventuell an der Kolbenstange haftendes Dichtmedium abzustreifen und dem Dichtmediumkreislauf rückzuführen. Die Dichtanordnung ist derart ausgeführt, dass dieser Abstreifring differenzdrucklos gehalten wird, wobei der Druck in der siebenten Ausnehmung (52) im betriebsgemäßen Einsatz mit dem vor dem Abstreifring (50) wirkenden Druck verbunden ist, sodass der Abstreifring (50) differenzdrucklos gehalten wird.

In einer vorteilhaften und konstruktiv einfachen Ausgestaltung werden die Ausnehmungen in der Dichtanordnung durch zwei L-förmige Kammerscheiben gebildet, die axial aneinanderliegend angeordnet sind, wobei jeweils ein Dichtelement in der durch die L-förmige Kammerscheibe gebildete Ausnehmung angeordnet ist. Solche L-förmigen Kammerscheiben können, z.B. durch durchgehende Bolzen, sehr einfach zu einer kompakten Dichtanordnung zusammengestellt werden. Weiters ist es konstruktiv vorteilhaft, wenn die zwei L-förmigen Kammerscheiben gleichgerichtet angeordnet sind, sodass der radiale Schenkel einer L-förmigen Kammerscheibe zwischen den beiden Dichtelementen angeordnet ist und die beiden Dichtelemente axial beabstandet von diesem radialen Schenkel angeordnet sind. Bei einer solchen Ausführung kann die Zuleitung einfach in diesem mittigen radialen Schenkel angeordnet werden.

Als Dichtelemente kommen starre, segmentierte oder geschnittene Packungsring oder Packungsring-Kombinationen, oder auch hydraulische Dichtringe in Frage. Damit kann eine hohe Flexibilität erzielt werden und die Dichtanordnung kann optimal auf den jeweiligen konkreten Anwendungsfall und die herrschenden Bedingungen angepasst werden.

Bei Verwendung eines hydraulischen Dichtringes wird dieser vorteilhaft in einem starren L-förmigen Stützring axial anliegend angeordnet, wobei der Stützring radial beabstandet vom radialen Ende der Ausnehmung bleibt. Dabei kann zwischen Stützring und hydraulischem Dichtring auch eine Nebenabdichteinheit angeordnet ist. Eine solche Anordnung ist kompakt und dichtet sowohl die Hauptdichtfläche (hier zur Kolbenstange), als auch Nebendichtflächen sicher ab.

Ganz besonders vorteilhaft ist es, wenn in einen zwischen ersten Dichtelement und dritten Dichtelement gebildeten Zwischenraum eine Zuleitung mündet, die im betriebsgemäßen Einsatz mit dem Saugdruck des Kolbenkompressors verbunden ist, sodass in diesem Zwischenraum der Saugdruck wirkt. Dadurch wird erreicht, dass dieser Zwischenraum auf Saugdruck gehalten wird, womit das erste Dichtelement nur mehr gegen den (niedrigen) konstanten Saugdruck abdichten muss. Der (hohe) dynamische Arbeitsdruck wird dabei durch das dritte Dichtelement abgebaut. Dies erleichtert die konstruktive Auslegung der Dichtanordnung und verringert die Anforderungen an das erste Dichtelement, vor allem hinsichtlich geforderter Lebensdauer, erheblich. Außerdem wird dadurch natürlich vorteilhaft erreicht, dass der Betriebsdruck des Dichtmediums erheblich reduziert werden kann und folglich in allen beteiligten Systemen mit niedrigeren Drücken gearbeitet werden kann.

Die am zweiten Dichtelement wirkende Druckdifferenz kann gesenkt werden, wenn an einem zweiten axialen Ende der Dichtanordnung in einer weiteren vierten Ausnehmung der Dichtanordnung benachbart zum zweiten Dichtelement ein viertes Dichtelement angeordnet ist, das als Packungsring oder Packungsring-Kombination oder als hydraulischer Dichtring ausgeführt ist, da dann die Druckdifferenz auf das zweite und vierte Dichtelement aufgeteilt wird. Diese Maßnahme reduziert die Anforderungen an das zweite Dichtelement, vor allem hinsichtlich geforderter Lebensdauer. Außerdem wird dadurch die Betriebssicherheit der Dichtanordnung erhöht, da das vierte Dichtelement noch eine gewisse Dichtwirkung aufrecht erhält, falls das zweite Dichtelement versagen sollte.

Um eine Dichtmediumleckage zu verhindern, kann an einem zweiten axialen Ende der Dichtanordnung ein fünftes Dichtelement angeordnet sein, das als Abstreifring ausgeführt ist. Damit wird noch auf der Kolbenstange haftendes Dichtmedium abgestreift, das dem Dichtmediumkreislauf rückgeführt werden kann.

Die Betriebssicherheit kann auch erhöht werden, indem zwischen erstem Dichtelement und zweitem Dichtelement in einer weiteren sechsten Ausnehmung der Dichtanordnung ein weiteres sechstes Dichtelement angeordnet ist, das als Packungsring oder Packungsring-Kombination oder als hydraulischer Dichtring ausgeführt ist, und das im betriebsgemäßen Einsatz radial beabstandet von der Kolbenstange angeordnet ist. Ein solches Dichtelement ist im normalen Betrieb wirkungslos, wird aber aktiviert, falls das erste Dichtelement ausfallen sollte, da dann am sechsten Dichtelement der abzudichtende Druck ansteht.

Das als Abstreifring wirkende siebente Dichtelement kann einfach differenzdrucklos gehalten werden, wenn der vor dem Abstreifring wirkende Druck mit der siebenten Ausnehmung verbunden wird.

Die gegenständliche Erfindung wird nachfolgend anhand der schematischen, beispielhaften, nicht einschränkenden und vorteilhafte Ausgestaltungen zeigenden Figuren 1 bis 6 beschrieben. Dabei zeigt
Fig. 1 eine gasdichte Abdichtung und die
Fig. 2 bis 6 weitere vorteilhafte Ausgestaltungen einer gasdichten Abdichtung.

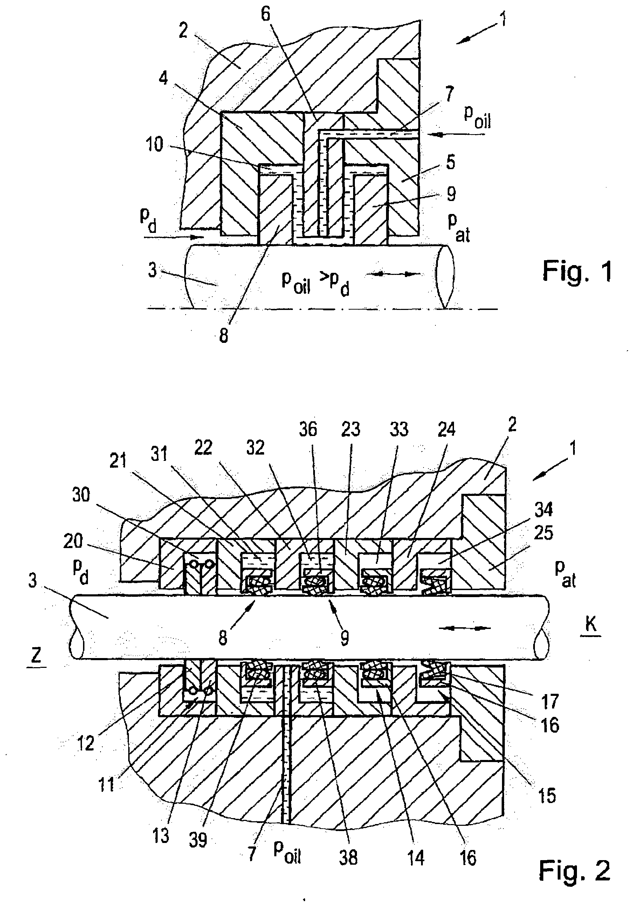

In Fig. 1 ist eine Dichtanordnung 1 zur Abdichtung einer axial hin- und hergehenden Kolbenstange 3 eines Kolbenkompressors gegenüber einen abzudichtenden Druck p_{d} eines Arbeitsmediums, z.B. der Zylinderdruck, dargestellt. Die Dichtanordnung 1 ist in einem feststehenden Gehäuseteil 2 des Kompressors angeordnet und dichtet zwischen diesem Gehäuseteil 2 und der bewegten Kolbenstange 3.

Die Dichtanordnung 1 umfasst im gezeigten Beispiel zwei L-förmige Kammerscheiben 4, 5, die im dargestellten Ausführungsbeispiel axial durch eine Trennscheibe 6 getrennt sind. Die L-förmigen Kammerscheiben 4, 5 und die Trennscheibe 6 sind axial aneinander anliegend angeordnet und radial von der Kolbenstange 3 beabstandet, um ein Anstreifen der Kolbenstange 3 an den Kammerscheiben 4, 5 zu verhindern und um eine Beweglichkeit der Kolbenstange 3 quer zur Hubbewegung (angedeutet durch den Doppelpfeil) zu ermöglichen. Im einfachsten Fall kann die Trennscheibe 6 aber auch weggelassen werden. Es sind aber auch andere Ausführungen, z.B. mit T-förmigen Trennscheiben, denkbar. An einer Kammerscheibe 5 kann radial außen auch ein Flansch vorgesehen sein, mittels dem die Dichtanordnung 1 am Gehäuseteil 2 befestigt werden kann. Die Kammerscheiben 4, 5 und gegebenenfalls die Trennscheibe 6 können in bekannter Weise durch einen durchgehenden Bolzen zusammengehalten werden. Durch diese Anordnung entsteht zwischen den L-förmigen Kammerscheiben 4, 5, gegebenenfalls der Trennscheibe 6 und der Kolbenstange 3 eine Ausnehmung 10. In dieser Ausnehmung 10 sind ein erstes und zweites Dichtelement 8, 9 angeordnet, wobei die Dichtelemente 8, 9 durch den wirkenden Druck eines in die Ausnehmung 10 zugeführten Dichtmediums jeweils an den axialen Enden der Ausnehmung 10, also an den radialen Schenkeln der L-förmigen Kammerscheiben 4, 5, anliegen und axial voneinander getrennt angeordnet sind (die Orientierungen "axial" und "radial" sind auf die Orientierung der Kolbenstange 3 bezogen). Das erste und zweite Dichtelement 8, 9 sind radial außen beabstandet von den Kammerscheiben 4, 5, also von den axialen Schenkeln der Kammerscheiben 4, 5, angeordnet und liegen radial innen an der Dichtfläche an der Kolbenstange 3 an. Die Dichtelemente 8, 9 können sich somit mit der Kolbenstange 3 quer zur Hubbewegung frei bewegen (abgesehen von Reibungskräften zwischen Dichtelement 8, 9 und Kammerscheibe 4, 5). In der Dichtanordnung 1 ist weiters eine Zuleitung 7 vorgesehen, die mit der Ausnehmung 10 verbunden ist und über die ein Dichtmedium, wie z.B. ein Öl, unter einem Druck pₒᵢₗ, der größer ist als der abzudichtende Druck p_{d}, in die Ausnehmung 10 zugeführt werden kann. Im Falle eines sich dynamisch ändernden Arbeitsdruckes p_{d} muss natürlich gelten pₒᵢₗ > p_{d,max}, oder der Druck des Dichtmediums wird dynamisch an den Druck des Arbeitsmediums angepasst, sodass immer gilt pₒᵢₗ > p_{d}. Das Dichtmedium ist somit durch die Dichtelemente 8, 9 in der Ausnehmung 10 eingeschlossen und wirkt radial außen und axial auf die Dichtelemente 8, 9, die somit radial nach innen an die Kolbenstange 3 und axial an die Kammerscheiben 4, 5 gedrückt werden und somit abdichten. Dadurch entsteht eine Dichtmediumbarriere, die eine Leckage des abzudichtenden gasförmigen Arbeitsmediums des Kompressors verhindert. Bei einer allfälligen Bewegung der Kolbenstange 3 quer zur Hubbewegung werden die Dichtelemente 8, 9 ohne Beeinträchtigung der Dichtwirkung mitbewegt.

Als Dichtelemente 8, 9 können entweder bekannte hydraulische Dichtringe, wie z.B. ein Lippendichtring oder ein Kompaktdichtring, mit einer an der Kolbenstange 3 anliegenden Dichtlippe, oder aber auch hinlänglich bekannte starre, geschnittene oder segmentierte Packungsringe oder Packungsring-Kombinationen, wie z.B. eine Kombination aus einem radial und tangential geschnittenen Packungsring, eingesetzt werden. Hydraulische Dichtringe können bekanntermaßen auch so ausgeführt sein, dass Dichtmedium, das bei einem Hub durch die Dichtlippe durchgepresst wird, beim Gegenhub durch die Dichtlippe wieder "zurückgesaugt" wird, sodass in Summe keine Leckage von Dichtmedium durch den hydraulischen Dichtring entsteht. Bei der Verwendung von Packungsringen oder Packungsring-Kombinationen entsteht gewöhnlich eine geringe Leckage von Dichtmedium durch die Abdichtung, die aber in der Regel kein Problem darstellt. Weiters entsteht bei Packungsringen in der Regel auch eine Stillstandsleckage, während ein hydraulischer Dichtring durch den Dichtmediumdruck auch im Stillstand dichtet, zumindest solange der Dichtmediumdruck aufrecht erhalten wird.

In Fig. 2 ist eine weitere vorteilhafte Ausgestaltung der Dichtanordnung 1 dargestellt. Die Dichtanordnung 1 umfasst hier mehrere hintereinander angeordnete L-förmige Kammerscheiben 20, 21, 22, 23, 24, wobei die L-förmigen Kammerscheiben 20, 21, 22, 23, 24 hier allesamt gleichgerichtet ausgerichtet sind, womit die axialen Schenkel alle in dieselbe Richtung weisen. Es sind aber auch andere Ausführungen, z.B. mit T-förmigen Trennscheiben, denkbar. Am kurbelgehäuseseitigen Ende K wird diese Dichtanordnung 1 in axialer Richtung durch eine Endscheibe 25, die als Flansch zur Befestigung im Gehäuseteil 2 ausgeformt ist, abgeschlossen. Die Kammerscheiben 20, 21, 22, 23, 24 und die Endscheibe 25 sind wiederum radial beabstandet von der Kolbenstange 3 angeordnet. Zwischen einer L-förmigen Kammerscheibe 20, 21, 22, 23, 24 und dem radialen Schenkel der benachbarten Kammerscheibe 20, 21, 22, 23, 24 bzw. der Endscheibe 25 bilden sich somit Ausnehmungen 30, 31, 32, 33, 34 aus, in denen nun Dichtelemente mit unterschiedlichen Funktionen und axial voneinander beabstandet angeordnet sein können. Die einzelnen Dichtelemente sind aber allesamt radial beabstandet von den jeweiligen radialen Enden der Ausnehmungen 30, 31, 32, 33, 34 angeordnet, damit die Kolbenstange 3 ungehindert quer zur Hubbewegung bewegbar bleibt.

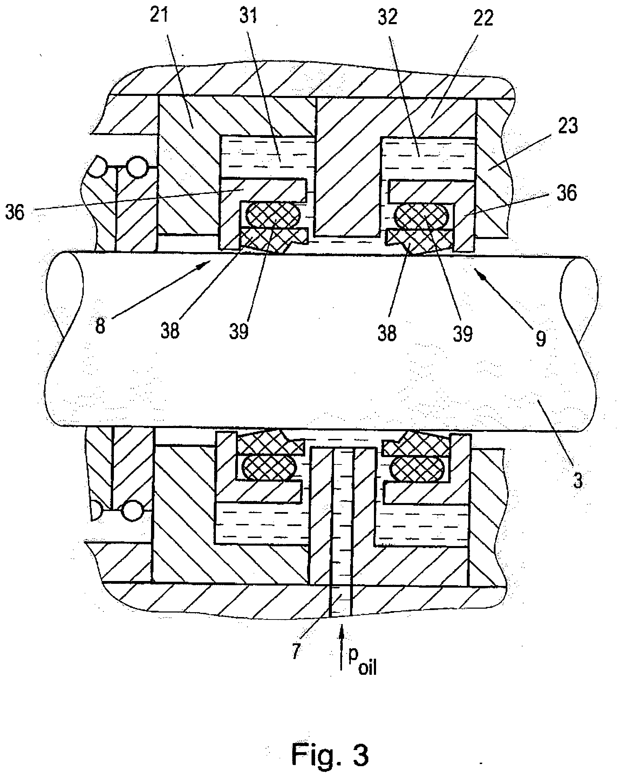

Die eigentliche Abdichtung erfolgt durch die Dichtelemente 8, 9, die in den von drei benachbarten Kammerscheiben 21, 22, 23 gebildeten Ausnehmungen 31, 32 angeordnet sind, wie oben zu Fig. 1 beschrieben. Die Zuleitung 7 für das Dichtmedium kann dazu durch den radialen Schenkel einer L-förmigen Kammerscheibe 22 geführt werden. Ein Dichtelement 8, 9, im Detail dargestellt in Fig. 3, umfasst hier jeweils einen L-förmigen starren Stützring 36, der am radialen Schenkel der axial äußeren Kammerscheiben 21, 23 anliegt und radial beabstandet vom axialen Schenkel der axial äußeren Kammerscheiben 21, 23 angeordnet ist. Am radialen Schenkel des Stützringes 36 liegt axial ein hydraulischer Dichtring 38 an. Zwischen dem axialen Schenkel des Stützringes 36 und dem hydraulischen Dichtring 38 kann weiters eine elastische Nebenabdichteinheit 39, z.B. ein O-Ring, angeordnet sein. Diese Nebenabdichteinheit 39 dient zum Abdichten der Nebendichtflächen, hier z.B. zwischen radialem Schenkel des Stützringes 36 und dem hydraulischen Dichtring 38, aber auch zum Andrücken des hydraulischen Dichtringes 38 an die Dichtfläche der Kolbenstange 3. Die Verwendung eines O-Ringes als Nebenabdichteinheit 39 ist besonders vorteilhaft, da ein elastischer, nicht kompressibler O-Ring den anstehenden Dichtmediumdruck in eine radiale Anpresskraft, mit der der Dichtring 38 gegen die Kolbenstange 3 gepresst wird, umwandelt. Diese Nebenabdichteinheit 39 kann aber auch entfallen, in diesem Fall würde der hydraulische Dichtring 38 auch am axialen Schenkel des Stützringes 36 anliegen und diese Nebendichtfläche dichten. Der L-förmige Stützring 36, gegebenenfalls die Nebenabdichteinheit 39 und der hydraulische Dichtring 38 sind axial vom mittigen radialen Schenkel der Kammerscheibe 22 beabstandet, damit das Dichtmedium das Dichtelement 8, 9 zur Abdichtung axial an den jeweiligen radialen Schenkel der Kammerscheibe 21, 23 andrücken kann. Bei einer radialen Bewegung der Kolbenstange 3 wird das Dichtelement 8, 9, hier die Anordnung aus L-förmigen Stützring 36, gegebenenfalls elastischen Stützring 39 und hydraulischen Dichtring 38, unter Beibehaltung der Dichtwirkung mit der Kolbenstange 3 mitbewegt.

Am zylinderseitigen Ende Z der Dichtanordnung 1 ist vor den Dichtelementen 8, 9 und axial beabstandet dazu in der Ausnehmung 30 der L-förmigen Kammerscheibe 20 ein drittes Dichtelement 11, hier eine Kombination aus einem radial geschnittenen 12 und tangential geschnittenen Packungsring 13, angeordnet. Das dritte Dichtelement 11 kann aber auch als starrer oder segmentierter Packungsring oder als eine Packungsring-Kombination ausgeführt sein. An diesem dritten Dichtelement 11 wirkt somit im betriebsgemäßen Einsatz der Dichtanordnung 1 der hohe Arbeitsdruck p_{d} des Arbeitsmediums. Dieses dritte Dichtelement 11 dient im Wesentlichen dazu, einerseits das Eindringen von Schmutz in die eigentliche Abdichtung gebildet durch die beiden Dichtelemente 8, 9 zu verhindern, und andererseits im Falle des Versagens des Dichtelements 8 durch das dritte Dichtelement 11 noch eine gewisse Dichtwirkung aufrecht erhalten zu können, womit zumindest ein ungehindertes Austreten von Dichtmedium in den Zylinderraum verhindert werden kann.

Am kurbelgehäuseseitigen Ende K ist nach den Dichtelementen 8, 9 in der Ausnehmung 33 der L-förmigen Kammerscheibe 23 ein viertes Dichtelement 14, hier wieder eine Kombination aus einem L-förmigen Stützring, gegebenenfalls Nebenabdichteinheit und hydraulischem Dichtring wie oben beschrieben, angeordnet. Durch dieses vierte Dichtelement 14 wird einerseits eine Aufteilung der wirkenden Druckdifferenz zwischen dem Druck pₒᵢₗ des Dichtmediums und des im Kurbelgehäuse wirkenden Atmosphärendruckes pₐₜ auf die Dichtelemente 9 und 14 erreicht, und andererseits bildet dieses Dichtelement 14 wiederum eine gewisse Sicherheit, falls das Dichtelement 9 versagen sollte. Anstelle eines hydraulischen Dichtringes kann aber als Dichtelement 14 wiederum ein starrer, geschnittenen oder segmentierter Packungsring bzw. eine Packungsring-Kombination aus solchen Packungsringen verwendet werden.

Weiters kann die Dichtanordnung 1 am kurbelgehäuseseitigen Ende K durch ein fünftes Dichtelement 15, hier ein Abstreifring 17, der in einer Ausnehmung 34 der letzten L-förmigen Kammerscheibe 24 angeordnet ist, abgeschlossen werden. Der differenzdrucklose Abstreifring 17 ist dabei in einem L-förmigen starren Stützring 16 angeordnet und kann auch durch Federn oder eine andere Vorspannung axial an den Stützring 16 angedrückt werden, um ein axiales Hin- und Herbewegen des Abstreifringes 17 zu unterbinden.. Durch den Abstreifring 17 wird überschüssiges, an der Kolbenstange 3 haftendes Dichtmedium von der Kolbestange 3 entfernt. Dieses überschüssige Dichtmedium kann in der Ausnehmung 34 gesammelt werden und von dort durch entsprechende Ableitungen abgeführt und einem Dichtmediumreservoir zugeführt werden. Außerdem verhindert das fünfte Dichtelement 15 ein Eindringen von Schmutz in die eigentliche Abdichtung gebildet durch die beiden Dichtelemente 8, 9 und gegebenenfalls Dichtelement 14.

Das dritte, vierte und fünfte Dichtelement 11, 14, 15 sind in der Dichtanordnung 1 optional und können je nach Bedarf und Anwendung in beliebigen Kombinationen eingesetzt werden.

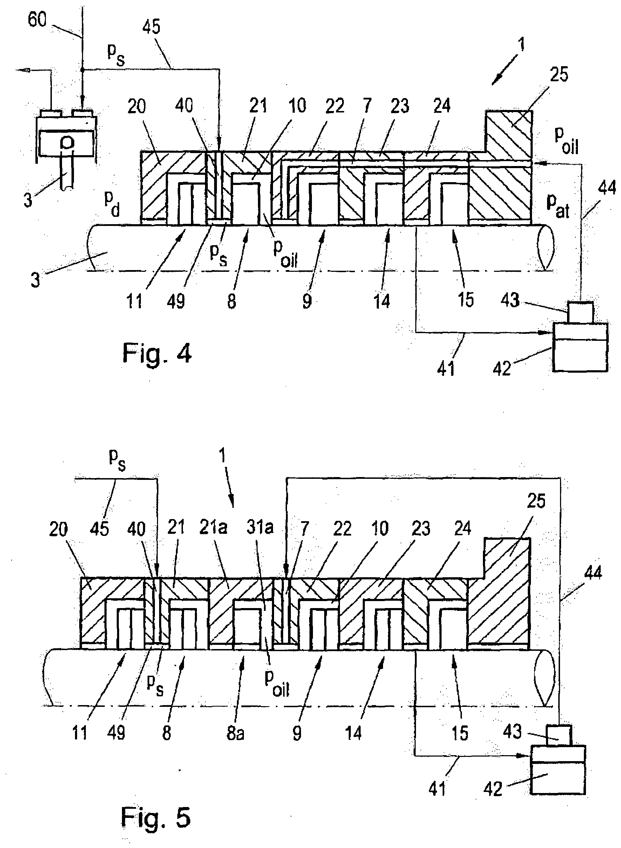

Weitere Ausführungen werden in den Figuren 4 bis 6 gezeigt. Bei diesen Ausführungen wird zylinderseitig vor dem ersten Dichtelement 8 der Druck auf den Saugdruck pₛ des Kompressors gehalten. Dies hat den Vorteil, dass durch das erste und zweite Dichtelement 8, 9 nur mehr der (niedrige) statische Saugdruck pₛ abgedichtet werden muss. Der (hohe) dynamische Zylinderdruck p_{d} - pₛ wird durch ein davor liegendes Dichtelement 11 abgebaut. Der notwendige Druck pₒᵢₗ des Dichtmediums kann daher entsprechend weit abgesenkt werden. An den einzelnen Dichtelementen 8, 9 liegt daher ebenfalls eine niedrigere Druckdifferenz an, wodurch die Anforderungen an die Dichtelemente 8, 9 verringert werden können. Z.B. werden für Kompressoranwendungen typischerweise 8.000 Betriebsstunden ohne Ausfall für die Dichtanordnung 1 gefordert. Aufgrund der hohen Relativgeschwindigkeiten zwischen Dichtelementen 8, 9 und Kolbenstange 3 und den möglichen hohen abzudichtenden Druckdifferenzen sind daher z.B. bei gewissen Anwendungen hydraulische Dichtringe als Dichtelemente 8, 9 ungeeignet, da diese bei solchen Betriebsbedingungen die geforderte Lebensdauer nicht erreichen würden. Durch die Absenkung der abzudichtenden Druckdifferenz durch die oben beschriebene Maßnahme sinken jedoch diese Anforderungen an die Dichtelemente 8, 9, wodurch auch hydraulische Dichtringe eingesetzt werden können.

In einer möglichen Ausgestaltung der Dichtanordnung 1 werden, wie in Fig. 4 gezeigt, das erste und zweite Dichtelement 8, 9 durch zwei hydraulische Dichtringe gebildet, wie zu Fig. 1 beschrieben. Zylinderseitig vor dem und axial beabstandet zum ersten Dichtelement 8 ist ein drittes Dichtelement 11, hier in Form einer Packungsring-Kombination, angeordnet. Das dritte Dichtelement 11 kann aber auch als starrer oder segmentierter Packungsring oder als eine Packungsring-Kombination ausgeführt sein. Da das erste Dichtelement 8 und dritte Dichtelement 11 axial beabstandet voneinander angeordnet sind, entsteht zwischen diesen Dichtelementen 8, 11 ein Zwischenraum 49, der hier radial durch die erste Kammerscheibe 21 begrenzt wird. In diesen Zwischenraum 49 wird der Druck über eine Zuleitung 40 in der ersten Kammerscheibe 21, die über eine Zuführleitung 45 mit dem Saugdruck pₛ, z.B. mit der Saugleitung 60 des Kompressors, verbunden ist, auf Saugdruck pₛ gehalten. Im Zwischenraum 49 zwischen ersten Dichtelement 8 und dritten Dichtelement 11 wirkt somit der statische Saugdruck pₛ. Durch das Dichtmedium muss somit nur mehr gegenüber dem Saugdruck pₛ abgedichtet werden. Die dynamische Druckdifferenz p_{d} - pₛ wird durch das dritte Dichtelement 11, hier eine Packungsring-Kombination, abgebaut, die wesentlich druckunempfindlicher ist als ein hydraulischer Dichtring. Hinsichtlich der wirkenden Drücke muss daher nur mehr pₒᵢₗ>pₛ erfüllt werden.

Zur Kurbelgehäuseseite K sind wiederum ein viertes Dichtelement 14 in Form eines hydraulischen Dichtringes, wie oben zu Fig. 2 beschrieben, und ein fünftes Dichtelement 15 in Form eines Abstreifringes, ebenfalls wie oben zu Fig. 2 beschrieben, vorgesehen. Hinsichtlich deren Funktion wird auf die Beschreibung zur Fig. 2 und 3 verwiesen. Auf das vierte Dichtelement 14 kann auch verzichtet werden. Auch das fünfte Dichtelement 15 ist, insbesondere bei der Verwendung von hydraulischen Dichtringen mit "Rücksaugung" wie oben beschrieben, nicht zwingend erforderlich. Falls vorhanden wird durch das fünfte Dichtelement 15 (Abstreifring) das auf der Kolbenstange 3 haftende Dichtmedium entfernt, womit im Wesentlichen kein Dichtmedium in das Kurbelgehäuse gelangt. Das zurückgehaltene Dichtmedium wird über eine Dichtmediumleitung 41 einem Dichtmediumreservoir 42 zugeführt. Von dort wird Dichtmedium unter einen Druck pₒᵢₗ mittels einer Pumpe 43 über eine Zuführleitung 44 der Zuführung 7 zugeführt. Eventuell in den Zylinderraum verlorengegangenes Dichtmedium, insbesondere bei Verwendung eines Packungsringes oder einer Packungsring-Kombination als erstes Dichtelement 8, muss regelmäßig in das Dichtmediumreservoir nachgefüllt werden.

Im Ausführungsbeispiel nach der Fig. 5 werden anstatt hydraulischer Dichtringe, Packungsring-Kombinationen als erstes und zweites Dichtelement 8, 9 verwendet. Damit ergibt sich immer eine gewisse Dichtmediumleckage in den Zylinderraum und in das Kurbelgehäuse, da eine solche Packungsring-Kombination nie gänzlich dicht ist. Ansonsten ist zwischen ersten und zweiten Dichtelement 8, 9, in der Ausnehmung 31 a einer weiteren sechsten Kammerscheibe 21 a ein weiteres sechstes Dichtelement 8a, hier z.B. ein hydraulischer Dichtring (könnte aber ebenso ein Packungsring oder eine Packungsring-Kombination sein), vorgesehen. Dieses sechste Dichtelement 8a ist aber mit Übermaß eingebaut, d.h. es liegt vorerst radial innen nicht dichtend an der Kolbenstange 3 an, und ist daher vorerst nicht aktiviert. Versagt jedoch das erste Dichtelement 8, so wirkt an einer Seite des sechsten Dichtelements 8a plötzlich der Saugdruck pₛ und an der anderen Seite der Dichtmediumdruck pₒᵢₗ und das sechste Dichtelement 8a kann so ausgelegt sein, dass es in diesem Fall aktiviert wird und durch den Druck des Dichtmediums pₒᵢₗ dichtend gegen die Kolbenstange 3 gepresst wird. Das sechste Dichtelement 8a dient somit der Sicherheit und Aufrechterhaltung der Dichtwirkung bei Ausfall des ersten Dichtelements 8a. Ein solches sechstes Dichtelement 8a könnte aber natürlich auch in einer Dichtanordnung wie in Fig. 2 gezeigt eingesetzt werden.

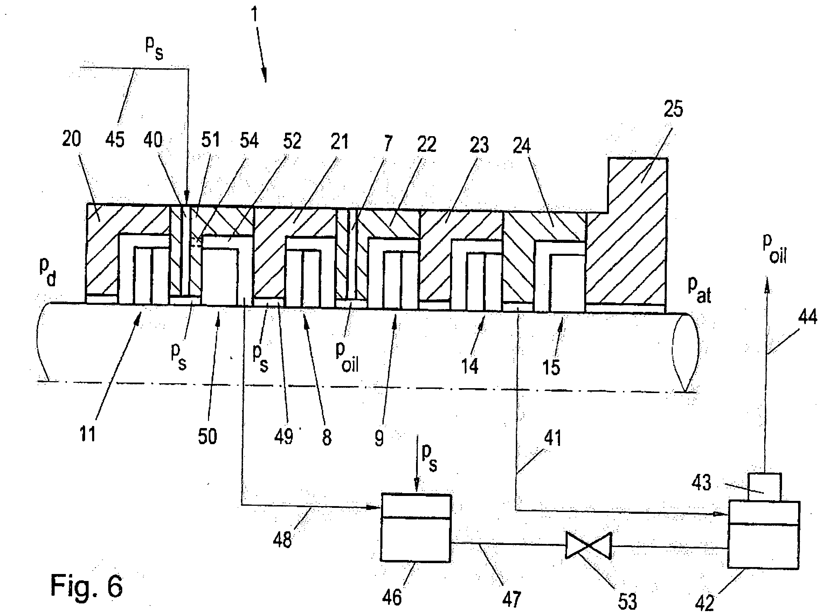

Bei den Ausführungen nach der Fig. 4 und 5 kann es zu einer Dichtmediumleckage in den Zylinderraum kommen. Um auch eine solche Leckage zu verhindern, wird erfindungsgemäß zylinderseitig ein Abstreifring vorgesehen, wie in Fig. 6 gezeigt. Dazu ist zwischen erstem Dichtelement 8 und drittem Dichtelement 11 in einer weiteren siebenten Kammerscheibe 51 ein siebentes Dichtelement 50 in Form eines Abstreifringes angeordnet. Das durch den Abstreifring von der Kolbenstange 3 entfernte Dichimedium wird über eine Abführleitung 48 aus der durch die siebente Kammerscheibe 51 gebildete Ausnehmung 52 abgeführt. Die Abführleitung 48 mündet hier in ein zweites Dichtmediumreservoir 46, das auf Saugdruck pₛ gehalten wird, wie in Fig. 6 angedeutet, um den Zwischenraum 49 auf Saugdruck pₛ zu halten und um den Abstreifring damit differenzdrucklos zu halten. Gleiches kann auch erreicht werden, indem der Saugdruck pₛ in die Ausnehmung 62 der siebenten Kammerscheibe 51 geführt wird, z.B. durch eine Verbindungsbohrung 54, die die Zuführung 40 mit der Ausnehmung 52 verbindet, wie in Fig. 6 strichliert angedeutet Das zweite Dichtmediumreservoir 46 kann über eine Drossel 53 und einer Verbindungsleitung 47 mit dem ersten Dichtmediumreservoir 42 verbunden sein. Die Drossel 53 ist notwendig, da das erste Dichtmediumreservoir 42 in der Regel, z.B. durch eine Entlüftung, auf Atmosphärendruck pₐₜ gehalten wird, und ansonsten das Dichtmedium ungehindert in das erste Dichtmediumreservoir 42 strömen würde. Ein solcher Abstreifring könnte aber auch in einer Dichtanordnung 1 nach der Fig. 2 eingesetzt werden. In diesem Fall könnte der Abstreifring differenzdrucklos gehalten werden, indem der vor dem Abstreifring wirkende Druck durch entsprechende Verbindungsbohrungen auch in die den Abstreifring aufnehmende Ausnehmung geführt wird.

Die oben beschriebenen Ausgestaltungen einer erfindungsgemäßen Dichtanordnung 1 sind nur beispielhaft und es sind beliebige Kombinationen aus den beschriebenen Dichtelementen 8, 8a, 9, 11, 14, 15 und 50 denkbar. Die erfindungsgemäße Dichtanordnung wird durch die sich anschließenden Ansprüche begrenzt.

## Patentansprüche

1. Dichtanordnung zur Abdichtung einer hin- und hergehenden Kolbenstange (3) eines Kolbenkompressors mit einem ersten (8) und zweiten Dichtelement (9), die in einer Ausnehmung (10, 31, 32) der Dichtanordnung (1) axial beabstandet angeordnet sind, wobei die Dichtelemente (8, 9) jeweils an einem axialen Ende der Ausnehmung (10, 31, 32) und an der Kolbenstange (3) anliegend angeordnet sind und in der Dichtanordnung (1) eine Zuleitung (7) für ein Dichtmedium vorgesehen ist, die mit der Ausnehmung (10, 31, 32) verbunden ist, wobei das erste und zweite Dichtelement (8, 9) in radialer Richtung beabstandet vom radialen Ende der Ausnehmung (10, 31, 32) angeordnet sind, sodass das Dichtmedium axial und an der radial äußeren Umfangsfläche des ersten und zweiten Dichtelements (8, 9) angreift, **dadurch gekennzeichnet, dass** an einem ersten axialen Ende der Dichtanordnung (1) in einer weiteren dritten Ausnehmung (30) der Dichtanordnung (1) ein drittes Dichtelement (11) angeordnet ist, das als Packungsring oder Packungsring-Kombination ausgeführt ist und zwischen erstem Dichtelement (8) und drittem Dichtelement (11) in einer weiteren als siebenten bezeichneten Ausnehmung (52) der Dichtanordnung (1) ein Abstreifring (50) angeordnet ist, wobei die Dichtanordnung (1) derart ausgeführt ist, dass dieser Abstreifring (50) differenzdrucklos gehalten wird, wobei der Druck in der siebenten Ausnehmung (52) im betriebsgemäßen Einsatz mit dem vor dem Abstreifring (50) wirkenden Druck verbunden ist, sodass der Abstreifring (50) differenzdrucklos gehalten wird.

2. Dichtanordnung nach Anspruch 1, **dadurch gekennzeichnet, dass** in der Dichtanordnung (1) zwei L-förmige Kammerscheiben (4, 5, 21, 22) axial aneinanderliegend angeordnet sind und jeweils ein Dichtelement (8, 9) in der durch die L-förmige Kammerscheibe (4, 5, 21, 22) gebildeten Ausnehmung (10, 31, 32) angeordnet ist.

3. Dichtanordnung nach Anspruch 2, **dadurch gekennzeichnet, dass** die zwei L-förmigen Kammerscheiben (21, 22) gleichgerichtet angeordnet sind, sodass der radiale Schenkel einer L-förmigen Kammerscheibe (22) zwischen den beiden Dichtelementen (8, 9) angeordnet ist und die beiden Dichtelemente (8, 9) axial beabstandet von diesem radialen Schenkel angeordnet sind.

4. Dichtanordnung nach Anspruch 3, **dadurch gekennzeichnet, dass** die Zuleitung (7) in diesem mittigen radialen Schenkel angeordnet ist.

5. Dichtanordnung nach einem der Ansprüche 1 bis 4, **dadurch gekennzeichnet, dass** als zumindest ein Dichtelement (8, 9) ein starrer, segmentierter oder geschnittener Packungsring oder eine Packungsring-Kombination daraus vorgesehen ist.

6. Dichtanordnung nach einem der Ansprüche 1 bis 4, **dadurch gekennzeichnet, dass** als zumindest ein Dichtelement (8, 9) ein hydraulischer Dichtring (38) vorgesehen ist.

7. Dichtanordnung nach Anspruch 6, **dadurch gekennzeichnet, dass** der hydraulische Dichtring (38) in einem starren L-förmigen Stützring (36) axial anliegend angeordnet ist und der Stützring (36) radial beabstandet vom radialen Ende der Ausnehmung (10, 31, 32) angeordnet ist.

8. Dichtanordnung nach Anspruch 7, **dadurch gekennzeichnet, dass** zwischen Stützring (36) und hydraulischem Dichtring (38) eine Nebenabdichteinheit (39) angeordnet ist.

9. Dichtanordnung nach einem der Ansprüche 1 bis 8, **dadurch gekennzeichnet, dass** in einem zwischen ersten Dichtelement (8) und dritten Dichtelement (11) gebildeten Zwischenraum (49) eine Zuleitung (40) mündet, die im betriebsgemäßen Einsatz mit dem Saugdruck (pₛ) des Kolbenkompressors verbunden ist, sodass in diesem Zwischenraum (49) der Saugdruck (pₛ) wirkt.

10. Dichtanordnung nach einem der Ansprüche 1 bis 9, **dadurch gekennzeichnet, dass** an einem zweiten axialen Ende der Dichtanordnung (1) in einer weiteren vierten Ausnehmung (33) der Dichtanordnung (1) ein viertes Dichtelement (14) angeordnet ist, das als Packungsring oder Packungsring-Kombination oder als hydraulischer Dichtring ausgeführt ist.

11. Dichtanordnung nach einem der Ansprüche 1 bis 10, **dadurch gekennzeichnet, dass** an einem zweiten axialen Ende der Dichtanordnung (1) in einer weiteren fünften Ausnehmung (34) der Dichtanordnung (1) ein fünftes Dichtelement (15) angeordnet ist, das als Abstreifring (17) ausgeführt ist.

12. Dichtanordnung nach Anspruch 10 oder 11, **dadurch gekennzeichnet, dass** der hydraulische Dichtring und/oder der Abstreifring (17) in einer durch einen L-förmigen Stützring (16) gebildeten Ausnehmung angeordnet ist.

13. Dichtanordnung nach einem der Ansprüche 1 bis 12, **dadurch gekennzeichnet, dass** zwischen erstem Dichtelement (8) und zweitem Dichtelement (9) in einer weiteren sechsten Ausnehmung (31a) der Dichtanordnung (1) ein weiteres sechstes Dichtelement (8a) angeordnet ist, das als Packungsring oder Packungsring-Kombination oder als hydraulischer Dichtring ausgeführt ist, und das im betriebsgemäßen Einsatz radial beabstandet von der Kolbenstange (3) angeordnet ist.

## Claims

1. Sealing arrangement for sealing a reciprocating piston rod (3) of a reciprocating piston compressor comprising a first (8) and a second sealing element (9) arranged at an axial distance in a recess (10, 31, 32) of the sealing arrangement (1), wherein the sealing elements (8, 9) are arranged at an axial end of the recess (10, 31, 32) respectively and in contact with the piston rod (3), and wherein a feed line (7) for a sealing medium is provided in the sealing arrangement (1) that is connected with the recess (10, 31, 32), wherein the first and the second sealing elements (8, 9) are arranged in radial direction at a distance from the radial end of the recess (10, 31, 32) so that the sealing medium acts on the first and second sealing elements (8, 9) axially and at the radial outer circumferential surface, **characterized in that** at a first axial end of the sealing arrangement (1) a third sealing element (11), that is implemented as a packing ring or packing ring combination, is arranged in a further third recess (30) of the sealing arrangement (1) and between the first sealing element (8) and third sealing element (11) a scraper ring (50) is arranged in a further recess (52), designated as seventh recess, of the sealing arrangement (1), wherein the sealing arrangement (1) is implemented such, that this scraper ring (50) is maintained without differential pressure, wherein during operational use the pressure in the seventh recess (52) is connected with the pressure that is in effect before the scraper ring (50) so that the scraper ring (50) is maintained without differential pressure.

2. Sealing arrangement according to Claim 1 **characterized in that** two L-shaped chamber plates (4, 5, 21, 22) are arranged in axial contact adjacent to each other in the sealing arrangement (1) und one sealing element (8, 9) respectively is arranged in the recess (10, 31, 32) that is constituted by the L-shaped chamber plate (4, 5, 21, 22).

3. Sealing arrangement according to Claim 2 **characterized in that** the two L-shaped chamber plates (21, 22) are aligned so that the radial leg of one L-shaped chamber plate (22) is arranged between the two sealing elements (8, 9), and the two sealing elements (8, 9) are arranged at an axial distance relative to this radial leg.

4. Sealing arrangement according to Claim 3 **characterized in that** the feed line (7) is arranged in this central radial leg.

5. Sealing arrangement according to one of the Claims 1 to 4 **characterized in that** a rigid, segmented or cut packing ring or a packing ring combination thereof is provided at least as one sealing element (8, 9).

6. Sealing arrangement according to one of the Claims 1 to 4 **characterized in that** a hydraulic sealing ring (38) is provided at least as one sealing element (8, 9).

7. Sealing arrangement according to Claim 6 **characterized in that** the hydraulic sealing ring (38) is arranged in a rigid L-shaped support ring (36) in axial contact, and the support ring (36) is arranged at a radial distance relative to the radial end of the recess (10, 31, 32).

8. Sealing arrangement according to Claim 7 **characterized in that** an accessory sealing unit (39) is arranged between the support ring (36) and hydraulic sealing ring (38).

9. Sealing arrangement according to Claim 1 to 8 **characterized in that** a feed line (40), which is connected during operational use with the suction pressure (pₛ) of the piston compressor, opens into an intermediate space (49) between the first sealing element (8) and the third sealing element (11) so that the suction pressure (pₛ) is in effect in this intermediate space (49).

10. Sealing arrangement according to one of the Claims 1 to 9 **characterized in that** at a second axial end of the sealing arrangement (1) a forth sealing element (14), that is implemented as a packing ring or packing ring combination or as a hydraulic sealing ring, is arranged in a further forth recess (33) of the sealing arrangement (1).

11. Sealing arrangement according to one of the Claims 1 to 10 **characterized in that** at a second axial end of the sealing arrangement (1) a fifth sealing element (14), that is implemented as a scraper ring (17), is arranged in a further fifth recess (33) of the sealing arrangement (1).

12. Sealing arrangement according to one of the Claims 10 to 11 **characterized in that** the hydraulic sealing ring and/or the scraper ring (17) is arranged in a recess that is constituted by an L-shaped support ring (16).

13. Sealing arrangement according to one of the Claims 1 to 12 **characterized in that** a further sixth sealing element (8a), that is implemented as a packing ring or packing ring combination or as a hydraulic sealing ring and that is arranged, during operational use, at a radial distance relative to the piston rod (3), is arranged between a first sealing element (8) and second sealing element (9) in a further sixth recess (31 a) of the sealing arrangement (1).

## Revendications

1. Dispositif d'étanchéité pour réaliser l'étanchéité d'une tige de piston (3) à mouvement alternatif d'un compresseur à piston, comprenant un premier (8) et un deuxième (9) élément d'étanchéité qui sont disposés avec un écartement axial dans un évidement (10, 31, 32) du dispositif d'étanchéité (1), dans lequel les éléments d'étanchéité (8, 9) sont disposés chacun à une extrémité axiale de l'évidement (10, 31, 32) et en appui contre la tige de piston (3) et, dans le dispositif d'étanchéité (1), est disposée une conduite d'amenée (7) pour un fluide d'étanchéité, qui est reliée à l'évidement (10, 31, 32), le premier et le deuxième élément d'étanchéité (8, 9) étant espacés dans la direction radiale de l'extrémité radiale de l'évidement (10, 31, 32), de sorte que le milieu d'étanchéité agit axialement et sur la surface périphérique radialement extérieure du premier et du deuxième élément d'étanchéité (8, 9), **caractérisé en ce que**, à une première extrémité axiale du dispositif d'étanchéité (1) est disposé, dans un autre évidement, appelé troisième évidement, (30) du dispositif d'étanchéité (1), un troisième élément d'étanchéité (11) qui est réalisé sous la forme d'une bague de garniture ou d'une combinaison de bagues de garniture, et une bague racleuse (50) est disposée entre le premier élément d'étanchéité (8) et le troisième élément d'étanchéité (11), dans un autre évidement, appelé septième évidement, (52) du dispositif d'étanchéité (1), le dispositif d'étanchéité (1) étant construit de telle sorte que cette bague racleuse (50) soit tenue sans pression différentielle, dans lequel la pression dans le septième évidement (52) est combinée, dans la mise en service, à la pression opérant devant la bague racleuse (50) si bien que la bague racleuse (50) est tenue sans pression différentielle.

2. Dispositif d'étanchéité selon la revendication 1, **caractérisé en ce que**, dans le dispositif d'étanchéité (1), deux rondelles à chambre en forme de L (4, 5, 21, 22) sont disposées en appui axial l'une contre l'autre et, à chaque fois, un élément d'étanchéité (8, 9) est disposé dans l'évidement (10, 31, 32) formé par les rondelles à chambre en forme de L (4, 5, 21, 22).

3. Dispositif d'étanchéité selon la revendication 2, **caractérisé en ce que** les deux rondelles à chambre en forme de L (21, 22) sont orientées dans le même sens de sorte que la branche radiale d'une rondelle à chambre en forme de L (22) est disposée entre les deux éléments d'étanchéité (8, 9) et que les deux éléments d'étanchéité (8, 9) sont espacés d'un écartement axial par cette branche radiale.

4. Dispositif d'étanchéité selon la revendication 3, **caractérisé en ce que** la conduite d'amenée (7) est disposée dans cette branche radiale médiane.

5. Dispositif d'étanchéité selon l'une des revendications 1 à 4, **caractérisé en ce qu'**il utilise, pour au moins un élément d'étanchéité (8, 9), une bague de garniture rigide, segmentée ou coupée, ou une combinaison de bagues de garniture de ce type.

6. Dispositif d'étanchéité selon l'une des revendications 1 à 4, **caractérisé en ce qu'**il utilise, pour au moins un élément d'étanchéité (8, 9), une bague d'étanchéité hydraulique (38).

7. Dispositif d'étanchéité selon la revendication 6, **caractérisé en ce que** la bague d'étanchéité hydraulique (38) est disposée en appui axial dans une bague d'appui rigide en forme de L (36) et la bague d'appui (36) est espacée radialement de l'extrémité radiale de l'évidement (10, 31, 32).

8. Dispositif d'étanchéité selon la revendication 7, **caractérisé en ce qu'**une unité d'étanchéité secondaire (39) est disposée entre la bague d'appui (36) et la bague d'étanchéité hydraulique (38).

9. Dispositif d'étanchéité selon l'une des revendications 1 à 8, **caractérisé en ce que**, dans un espace intermédiaire (49) formé entre le premier élément d'étanchéité (8) et le troisième élément d'étanchéité (11), débouche une conduite d'amenée (40) qui, dans l'utilisation conforme pour le fonctionnement, est reliée à la pression d'aspiration (pa) du compresseur à piston, de sorte que la pression d'aspiration (ps) règne dans cet espace intermédiaire (49).

10. Dispositif d'étanchéité selon l'une des revendications 1 à 9, **caractérisé en ce qu'**à une deuxième extrémité axiale du dispositif d'étanchéité (1), est disposé, dans un autre évidement, ou quatrième évidement (33), du dispositif d'étanchéité (1), un quatrième élément d'étanchéité (14) qui est constitué par une bague de garniture ou une combinaison de bagues de garniture ou par une bague d'étanchéité hydraulique.

11. Dispositif d'étanchéité selon l'une des revendications 1 à 10, **caractérisé en ce qu'**à une deuxième extrémité axiale du dispositif d'étanchéité (1), est disposé, dans un autre évidement, ou cinquième évidement, (34) du dispositif d'étanchéité (1), un cinquième élément d'étanchéité (15) qui est constitué par une bague racleuse (17).

12. Dispositif d'étanchéité selon l'une des revendications 10 ou 11, **caractérisé en ce que** la bague d'étanchéité hydraulique et/ou la bague racleuse (17) est ou sont disposées dans un évidement formé par une bague d'appui en forme de L (16).

13. Dispositif d'étanchéité selon l'une des revendications 1 à 12, **caractérisé en ce qu'**entre le premier élément d'étanchéité (8) et le deuxième élément d'étanchéité (9), est disposée, dans un autre évidement, ou sixième évidement (31 a), du dispositif d'étanchéité (1), un autre élément d'étanchéité ou sixième élément d'étanchéité (8a) qui est constitué par une bague de garniture ou une combinaison de bagues de garniture, ou par une bague d'étanchéité hydraulique, et qui, dans l'utilisation conforme pour le fonctionnement, est espacée radialement de la tige de piston (3).
